(19) Europäisches Patentamt
European Patent Office
Office européen des brevets

(11) **EP 4 678 798 A1**

(12) **EUROPEAN PATENT APPLICATION**
published in accordance with Art. 153(4) EPC

(43) Date of publication:
**14.01.2026 Bulletin 2026/03**

(21) Application number: **24770813.4**

(22) Date of filing: **08.03.2024**

(51) International Patent Classification (IPC):
**D04B 21/14** (2006.01)    **A47C 27/12** (2006.01)
**B60R 13/02** (2006.01)

(52) Cooperative Patent Classification (CPC):
**A47C 27/12; B60R 13/02; D04B 21/14**

(86) International application number:
**PCT/JP2024/009193**

(87) International publication number:
**WO 2024/190707 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.03.2023 JP 2023038033**

(71) Applicant: **Asahi Kasei Kabushiki Kaisha
Tokyo 1000006 (JP)**

(72) Inventor: **TSUJI, Yusuke
Tokyo 100-0006 (JP)**

(74) Representative: **dompatent
Partnerschaft von
Patentanwälten und Rechtsanwälten mbB
Deichmannhaus am Dom
Bahnhofsvorplatz 1
50667 Köln (DE)**

(54) **THREE-DIMENSIONAL KNITTED FABRIC AND VEHICLE INTERIOR MATERIAL INCLUDING SAME**

(57)    Provided are: a three-dimensional knitted fabric that is inhibited from collapsing due to excessive elongation when a tensile load is applied during seat installation, etc., and that has Taber abrasion resistance and scratch resistance according to ASTM; and a vehicle interior material that includes the three-dimensional knitted fabric. The present invention relates to a three-dimensional knitted fabric including a front layer knitted fabric, a back layer knitted fabric, and a connecting thread that connects the front layer knitted fabric and the back layer knitted fabric, the three-dimensional knitted fabric characterized in that the front layer knitted fabric includes a front surface layer positioned on the outermost side of the three-dimensional knitted fabric and a shape-fixing layer that is positioned farther inward in the three-dimensional knitted fabric than the front surface layer and that includes knit loops formed at the same positions as knit loops included in the front surface layer, the knitted fabric density after finishing is 30 to 64 courses/inch inclusive, and the ratio (A) of the number of knit loops included in the front surface layer to the number of knit loops included in the shape-fixing layer is more than 80% and 100% or less. The present invention also relates to a vehicle interior material that includes said three-dimensional knitted fabric.

EP 4 678 798 A1

**Description**

FIELD

The present invention relates to a three-dimensional knitted fabric, and to a vehicle upholstery comprising the same.

BACKGROUND

Three-dimensional knitted fabrics constructed with front/back double-layer knitted fabrics and connecting thread that connects the double-layer knitted fabrics, employ monofilaments as the connecting thread and thus have a cushioning property in the thickness direction, while they also ensure high air permeability by way of a mesh structure on the front and back knitted fabrics, and for this reason they are widely used as cooling and stuffiness-resistant cushion materials for a variety of articles including seat and beddings.

PTL 1 discloses a surface covering material composed of a three-dimensional knitted fabric, wherein the outer side of the front layer knitted fabric is the side that contacts with the human body, and the surface covering material has a stitch density of 11,500 to 20,000 on the front layer which can inhibit napping even when the surface is rubbed at the hook sections of a hook-and-loop fastener.

PTL 2 discloses a three-dimensional knitted fabric having a mesh on at least one side, with reinforcing yarn knitted into the opening of the mesh to stabilize the form of the mesh.

[CITATION LIST]

[PATENT LITERATURE]

[PTL 1] International Patent Publication No. WO2022/202815
[PTL 2] International Patent Publication No. WO2007/097363

SUMMARY

[TECHNICAL PROBLEM]

However, while the three-dimensional knitted fabric described in PTL 1, as a result of its dense knitted texture, has satisfactory durability against stimulation from rubbing of the surface by hard protrusions such as the hook sections of hook-and-loop fasteners (hereunder also referred to as "scratch resistance") and satisfactory Taber abrasion resistance according to JASO M403A, it was not designed in consideration of the even harsher conditions specified for the method of ASTM D3884-09, or of how the pattern deforms due to elongation of the knitted fabric.

Moreover, while the three-dimensional knitted fabric described in PTL 2 has improved stability of its mesh form by knitting of reinforcing yarn into the openings of the mesh knitted fabric, its design was not devised in consideration of scratch resistance, Taber abrasion resistance and deformation in the pattern (stitch) due to elongation of the knitted fabric.

In light of the current level of the prior art, it is an object of the present invention to solve the aforementioned problems of the prior art by providing a three-dimensional knitted fabric that produces a satisfactory tactile sensation in the three-dimensional knitted fabric while reducing stitch deformation due to excessive elongation under tensile load such as during setting of the sheet, and that exhibits Taber abrasion resistance and scratch resistance according to the ASTM method, as well as a vehicle upholstery comprising it.

[SOLUTION TO PROBLEM]

As a result of much diligent research directed toward solving the problems described above, the present inventors have completed this invention upon finding, unexpectedly, that the problems can be solved by a three-dimensional knitted fabric comprising a front layer knitted fabric, a back layer knitted fabric and connecting thread connecting the front layer knitted fabric and back layer knitted fabric, wherein either or both the front layer knitted fabric and back layer knitted fabric have a front side layer situated on the outer side of the three-dimensional knitted fabric, and a shape-anchoring layer situated on the inner side of the three-dimensional knitted fabric and comprising knit loops formed at the same location as the knit loops in the front side layer.

Specifically, the present invention provides the following.

[1] A three-dimensional knitted fabric comprising a front layer knitted fabric, a back layer knitted fabric and connecting thread connecting the front layer knitted fabric and back layer knitted fabric, the three-dimensional knitted fabric comprising, in the front layer knitted fabric, a front side layer situated on the outermost side of the three-dimensional knitted fabric, and a shape-anchoring layer that is situated further toward the inner side of the three-dimensional knitted fabric than the front side layer and includes knit loops formed at the same locations as the knit loops in the front side layer, wherein the finished knitted fabric density is 30 course/inch to 64 course/inch, and the percentage (A) of the number of knit loops in the front side layer with respect to the number of knit loops in the shape-anchoring layer is greater than 80% and 100% or lower.

[2] The three-dimensional knitted fabric according to [1] above, wherein the knit loops in the front side layer and the knit loops in the shape-anchoring layer are all formed at the same locations.

[3] The three-dimensional knitted fabric according to [1] or [2] above, wherein knit loops separated by 1 wale or more in the shape-anchoring layer are connected by sinker loops.

[4] The three-dimensional knitted fabric according to any one of [1] to [3] above, wherein the shape-anchoring layer is a denbigh stitch.

[5] The three-dimensional knitted fabric according to any one of [1] to [4] above, wherein the total fineness of the yarns forming the knit loops among all of the knit loops in the front layer knitted fabric is 100 dtex to 1000 dtex.

[6] The three-dimensional knitted fabric according to [5] above, wherein the total fineness of the yarns forming the knit loops among all of the knit loops in the front layer knitted fabric is 250 dtex to 1000 dtex.

[7] The three-dimensional knitted fabric according to any one of [1] to [6] above, wherein among the knit loops in the front layer knitted fabric, for all of the knit loops including the connecting threads, the value of the fineness of the threads other than the connecting threads forming the knit loops divided by the fineness of the connecting threads, is 2.8 or greater.

[8] The three-dimensional knitted fabric according to [7] above, wherein among the knit loops in the front layer knitted fabric, for all of the knit loops including the connecting threads, the value of the fineness of the threads other than the connecting threads forming the knit loops divided by the fineness of the connecting threads, is 3.0 or higher.

[9] The three-dimensional knitted fabric according to any one of [1] to [8] above, wherein the stitch density of the front layer knitted fabric is 11,500 to 20,000, as calculated by the following formula:

$$\text{Stitch density } M = N \times \sqrt{D}$$

{where N is the number of stitches (number) of the front layer knitted fabric per 2.54 cm-square, and D is the total fineness (dtex) of the fibers forming a single stitch of the front layer knitted fabric}.

[10] The three-dimensional knitted fabric according to any one of [1] to [9] above, wherein the constant load setting rate is 3% or lower when a 10 kg tensile load is applied in the warp direction of the three-dimensional knitted fabric over a period of 10 minutes.

[11] The three-dimensional knitted fabric according to any one of [1] to [10] above, wherein the air permeability of the three-dimensional knitted fabric from the connecting layer toward the front side knitted fabric is 33 cc/cm$^2$/sec or greater.

[12] The three-dimensional knitted fabric according to any one of [1] to [11] above, wherein heat-fusible yarn is included in either or both the front layer knitted fabric and back layer knitted fabric.

[13] A vehicle upholstery comprising a three-dimensional knitted fabric according to any one of [1] to [12] above, and having the front layer knitted fabric as the indoor side.

[14] The vehicle upholstery according to [13] above, which is a surface covering material for a seat .

[ADVANTAGEOUS EFFECTS OF INVENTION]

According to the invention there is provided a three-dimensional knitted fabric that inhibits stitch deformation due to excess elongation when subjected to a tensile load such as during sheet setting, and that has Taber abrasion resistance and scratch resistance according to the ASTM method, as well as a vehicle upholstery comprising it.

DESCRIPTION OF EMBODIMENTS

The invention will now be explained in detail by embodiments.

One embodiment of the invention is a three-dimensional knitted fabric comprising a front layer knitted fabric, a back layer knitted fabric and connecting thread connecting the front layer knitted fabric and back layer knitted fabric, the three-dimensional knitted fabric comprising, in the front layer knitted fabric, a front side layer situated on the outermost side of the three-dimensional knitted fabric, and a shape-anchoring layer that is situated further toward the inner side of the three-dimensional knitted fabric than the front side layer and includes knit loops formed at the same locations as the knit loops in the front side layer, wherein the finished knitted fabric density is 30 course/inch to 64 course/inch, and the percentage (A) of the number of knit loops in the front side layer with respect to the number of knit loops in the shape-anchoring layer is greater than 80% and 100% or lower.

The three-dimensional knitted fabric of the embodiment includes a three-dimensional knitted fabric constructed of a front layer knitted fabric, a back layer knitted fabric and connecting thread connecting the front layer knitted fabric and back layer knitted fabric. The front layer is the layer on the side that is exposed to the cabin when it is used as a vehicle upholstery.

The three-dimensional knitted fabric is knitted using a double Raschel warp knitting machine or double circular knitting machine, with the density of the knitted fabric set as desired, but the finished knitted fabric density is preferably 30 course/inch to 64 course/inch and more preferably 35 course/inch to 50 course/inch. If the finished knitted fabric density is 30 course/inch to 64 course/inch, it will be possible to obtain a suitable tactile sensation as a vehicle upholstery, and to obtain suitable air permeability when seated.

In order to obtain such knitted fabric density, the gauge of the knitting machine used is preferably 14 to 32 gauge and more preferably 18 to 28 gauge. The course density on the machine during knitting may be set as desired, but from the viewpoint of adjusting the knitted fabric density after finishing to within the aforementioned preferred range, knitting is preferably carried out to a density of 29 course/inch to 40 course/inch in the case of a double Raschel knitting machine, and more preferably it is knitted to a density of 33 course/inch to 40 course/inch. If it is 29 course/inch or greater, the stitches will not be loose and the wear resistance will be improved. If it is 40 course/inch or less, on the other hand, loops will more easily release from the knitting needle during knitting, thus facilitating knitting.

In the three-dimensional knitted fabric of this embodiment, the front layer knitted fabric comprises a front side layer situated on the outermost side of the three-dimensional knitted fabric, and a shape-anchoring layer that is situated further toward the inner side of the three-dimensional knitted fabric than the front side layer and includes knit loops formed at the same locations as the knit loops in the front side layer.

The front side layer is a layer situated on the outermost surface of the three-dimensional knitted fabric, and it is the section that significantly affects the design of the three-dimensional knitted fabric. The front side layer may have any arbitrary structure depending on the desired design.

The shape-anchoring layer is a layer that is situated on the inner side of the front side layer and includes knit loops formed at the same locations as the knit loops in the front side layer. If a shape-anchoring layer is provided, the knit loops forming the front side layer are anchored and stitch deformation caused by excessive elongation of the knitted fabric is reduced, while the Taber abrasion resistance and scratch resistance are also improved. The shape-anchoring layer preferably does not contribute to the design of the three-dimensional knitted fabric by itself being exposed on the surface. The shape-anchoring layer may have any desired structure, but in order to improve the Taber abrasion resistance and scratch resistance by anchoring together adjacent wales to inhibit movement of the knit loops, it is preferred to use a structure in which knit loops separated by 1 wale or more are connected together by sinker loops, and it is more preferred to use a denbigh pattern which knit loops separated by one wale are connected together by sinker loops, from the viewpoint of reducing stitch deformation due to warp elongation of the knitted fabric. From the same viewpoint, in the three-dimensional knitted fabric of this embodiment, the percentage (A) of the number of knit loops in the front side layer with respect to the number of knit loops in the shape-anchoring layer is greater than 80% and 100% or lower, and preferably greater than 90% and 100% or lower. The knit loops in the front side layer and the knit loops in the shape-anchoring layer are all formed at the same locations.

The shape-anchoring layer may be formed by, for example, yarn supplied from a separate reed further inward than the reed used for knitting of the front side layer, in a double Raschel knitting machine. Any desired method may be used for knitting of the shape-anchoring layer. For example, preferably the yarn is supplied from a reed with all-in threading, and the loops of the shape-anchoring layer overlap with all of the loops of the front layer knitted fabric.

The fineness of the fibers used in the shape-anchoring layer is preferably 50 dtex to 150 dtex, more preferably 50 dtex to 120 dtex and even more preferably 60 dtex to 120 dtex, from the viewpoint of anchoring the front side layer to reduce stitch deformation, improving the Taber abrasion resistance and scratch resistance, and avoiding exposure of the shape-anchoring layer on the surface.

The material for the fibers used in the front layer knitted fabric and back layer knitted fabric is not restricted, and it may be a single type of material or multiple materials combined by plying, combined twisting, mixed spinning or mixed knitting, although long fibers of polyethylene terephthalate are preferred from the viewpoint of raw yarn strength and light fastness. The fibers used in the front layer knitted fabric and back layer knitted fabric are preferably 100% polyethylene terephthalate fibers from the viewpoint of easier recycling, such as material recycling or chemical recycling. From the viewpoint of increasing the pull-out resistance of the single filaments to improve the scratch resistance, the polyethylene terephthalate fibers are preferably false twisted yarn, interlaced yarn or twisted yarn. The fibers used in the front layer knitted fabric and back layer knitted fabric are preferably raw-dyed yarn (colored yarn obtained by kneading a pigment) or pre-dyed yarn, in order to inhibit variation in the quantity of the three-dimensional knitted fabric by dyeing, and more preferably they are raw-dyed yarn that eliminates the need for a dyeing step.

The fineness of the fibers used in the front layer knitted fabric and back layer knitted fabric is preferably 50 dtex to 500 dtex, more preferably 50 dtex to 250 dtex and even more preferably 60 dtex to 250 dtex, from the viewpoint of reducing stitch deformation due to warp elongation. From the same viewpoint, the total fineness of the yarns forming the knit loops is preferably 100 dtex to 1200 dtex, more preferably 100 dtex to 1000 dtex, even more preferably 250 dtex to 1000 dtex and most preferably 250 dtex to 700 dtex, among all of the knit loops in the knitted fabric on the side with the shape-anchoring layer, of either the front layer knitted fabric or back layer knitted fabric.

When the fibers used in the front layer knitted fabric and back layer knitted fabric are multifilaments, the single yarn fineness is preferably 1 dtex to 6 dtex, although it is more preferably 3 dtex to 6 dtex which results in even higher single yarn strength.

The material of the fiber used for the connecting thread may be the same as that of the fibers used for the front layer knitted fabric and back layer knitted fabric.

The fibers used for the connecting thread may be multifilaments or monofilaments, but monofilaments are preferred. When monofilaments are used as the connecting thread, the fineness is preferably 30 dtex to 300 dtex and more preferably 50 dtex to 200 dtex, in order to inhibit protrusion of the monofilaments onto the knitted fabric surface and maintain a satisfactory cushioning property.

If the connecting thread protrudes onto the knitted fabric surface of the three-dimensional knitted fabric then it will be more likely to catch onto protrusions such as the hook sections of a hook-and-loop fastener, while the scratch resistance will also be reduced, and therefore preferably the stitches of the fibers forming the front layer knitted fabric are pressed against the stitches of the connecting thread so that the connecting thread does not protrude through the outer surface of the front layer knitted fabric (that is, the seating surface of the seat surface covering material), for which reason, among the knit loops in the knitted fabric on the side with the shape-anchoring layer, for all of the knit loops including the connecting threads, the value of the fineness of the threads other than the connecting threads forming each of the knit loops D1 divided by the fineness of the connecting threads D2 (hereunder also referred to as "D1/D2"), is preferably 2.8 or greater and more preferably 3.0 or greater.

In the three-dimensional knitted fabric of the embodiment, preferably the knitted patterns of the front layer knitted fabric and back layer knitted fabric, without including the front side layer or the shape-anchoring layer, are each a mesh structure having a thread arrangement such as 1-in, 1-out or 2-in, 2-out when supplying yarn from the guide bar using at least two reeds.

In the three-dimensional knitted fabric of the embodiment, preferably the stitch density of the front layer knitted fabric is 11,500 to 20,000, as calculated by the following formula:

$$\text{Stitch density } M = N \times \sqrt{D}$$

{where N is the number of stitches (number) of the front layer knitted fabric per 2.54 cm-square, and D is the total fineness (dtex) of the fibers forming a single stitch of the front layer knitted fabric}.

The phrase "total fineness (dtex) of the fibers forming one stitch of the front layer knitted fabric" indicates the total fineness of only the fibers forming the stitches, while excluding the fineness of the connecting threads, and further excluding non-stitch-forming fibers such as inlay stitching.

If the stitch density of the front layer knitted fabric is 11,500 or higher, protrusions such as the hook sections of a hook-and-loop fastener will be less likely to catch onto the individual filaments of the stitches of the front layer, and this will tend to prevent napping from being produced by breakage of the individual filaments. If the stitch density of the front layer knitted fabric is 20,000 or lower it will be possible to increase the air permeability of the front layer knitted fabric, thus tending to cause movement of heat or movement of moisture by convection of air, and to improve the cool feel during seating and contact when used in a vehicle upholstery, and helping to reduce perceived stuffiness.

From the viewpoint of inhibiting napping by protrusions and obtaining a more satisfactory cool feel and reduced stuffiness, the preferred range for the stitch density of the front layer knitted fabric is 13,000 to 19,000 and more preferably 14,000 to 19,000.

The three-dimensional knitted fabric of this embodiment preferably has a constant load setting rate of 3% or lower when a 10 kg load is applied for 10 minutes in the warp direction of the fabric and the load is then removed and the fabric is allowed to stand for 10 minutes, from the viewpoint of preventing excess elongation during sheet setting and preventing stitch deformation. The method of measuring the constant load setting rate is described in detail below.

The three-dimensional knitted fabric of the embodiment has an air permeability of preferably 33 cc/cm$^2$/sec or greater, more preferably 40 cc/cm$^2$/sec or greater and even more preferably 50 cc/cm$^2$/sec or greater, from the layer between the front layer knitted fabric and back layer knitted fabric of the three-dimensional knitted fabric (hereunder also referred to as "connecting layer") toward the front layer knitted fabric, in order to cause heat and humidity to migrate from the human body during sitting so that satisfactory coolness and stuffiness resistance are exhibited.

As used herein, the phrase "air permeability from the layer side, between the front layer knitted fabric and back layer knitted fabric of the three-dimensional knitted fabric, toward the front layer knitted fabric" means the air permeability of the three-dimensional knitted fabric measured under the suction conditions specified in the air permeability test method (Method A) of JIS L1096, with a three-dimensional knitted fabric test piece size of 15 cm-square set on the opening of the air permeability tester with the front layer knitted fabric facing downward, and a 3 mm-thick, 20 cm-square silicon rubber plate placed over the outer surface of the back layer knitted fabric to shield air from passing through the back layer knitted fabric, while allowing the air to enter through the four sided cross-section of the three-dimensional knitted fabric and pass through the connecting layer to permeate the front layer knitted fabric.

The air permeability from the back layer knitted fabric through the front layer knitted fabric of the three-dimensional knitted fabric, as generally measured according to the air permeability test method (Method A) of JIS L1096, is preferably 60 cc/cm$^2$/sec or greater, more preferably 70 cc/cm$^2$/sec or greater and even more preferably 90 cc/cm$^2$/sec or greater. The air permeability from the back layer knitted fabric through the front layer knitted fabric is more preferably 60 cc/cm$^2$/sec or greater, as a seat surface covering material to be used in combination with a cushion member incorporating a ventilation system.

In the three-dimensional knitted fabric of this embodiment, the heat-fusible yarn is preferably included in either or both the front layer knitted fabric and back layer knitted fabric, and especially in the shape-anchoring layer, from the viewpoint of anchoring the stitch of the front layer to reduce stitch deformation, and of improving the Taber abrasion resistance and scratch resistance. Here, "heat-fusible yarn" refers to yarn having a lower melting point than the other fibers in the front layer knitted fabric and back layer knitted fabric. The heat-fusible yarn has a melting point of preferably 200°C or lower and more preferably 180°C or lower. The material of the low-melting-point yarn is not restricted and may be obtained by compositing with multiple materials by plying, combined twisting or mixed spinning, but from the viewpoint of strength and light fastness it is preferred to use filaments of polyethylene terephthalate-based fibers.

The thickness of the three-dimensional knitted fabric of the embodiment may be set as desired, but it is preferably 2 mm to 12 mm and more preferably 2.5 mm to 8 mm, from the viewpoint of sewability and handleability of the surface covering material. The basis weight of the three-dimensional knitted fabric may also be set as desired but is preferably 150 to 1000 g/m$^2$ and more preferably 400 to 900 g/m$^2$.

When the three-dimensional knitted fabric uses pre-dyed yarn or raw-dyed yarn, the method of finishing the three-dimensional knitted fabric forming the three-dimensional knitted fabric of the embodiment may be finishing by passing the greige through steps such as scouring and heat setting, but finishing by heat setting alone is preferred from the viewpoint of process simplification. For a three-dimensional knitted fabric wherein the fibers used for the connecting thread of either the front layer knitted fabric and back layer knitted fabric are uncolored, the greige may be finished by processing via steps such as presetting, scouring, dyeing and heat setting.

The three-dimensional knitted fabric of this embodiment can be suitably used as a vehicle upholstery, wherein the knitted fabric containing the shape-anchoring layer, among the front layer knitted fabric and back layer knitted fabric, is on the indoor side.

EXAMPLES

The present invention will now be explained in more specific detail through the following Examples and Comparative Examples, with the understanding that the invention is in no way limited to the Examples.

The following methods were used to measure the physical properties of the three-dimensional knitted fabrics used in the following Examples.

(a) Percentage of number of knit loops in front side layer with respect to number of knit loops in shape-anchoring layer (%) (A)

A 100 mm-wide × 100 mm-long test piece is sampled with the weft direction of the three-dimensional knitted fabric as the widthwise direction and the warp direction as the lengthwise direction, and the loops of the shape-anchoring layer and front side layer are counted, the counts being used in calculation by the following formula. The measurement is conducted at 3 locations and the average is calculated.

[Mathematical Formula 1]

$$A = (\text{Knit loops in front side layer} / \text{knit loops in shape-anchoring layer}) \times 100$$

(b) Constant load setting rate (%) with 10 kg tensile load in warp direction for 10 minutes

A 80 mm-wide × 250 mm-long test piece was sampled with the weft direction of the three-dimensional knitted fabric as the widthwise direction and the warp direction as the lengthwise direction, and a 100 mm gauge mark was drawn in the lengthwise direction at the center section in the widthwise direction and lengthwise direction of the test piece. The test piece is mounted on an FLM-3M Fixed Load Elongation Test Apparatus by Daiei Kagaku Seiki Mfg. Co., Ltd., and a weight is attached to a total tensile load of 10 kg in the lengthwise direction of the test piece. After applying a 10 kg tensile load for 10 minutes, the test piece is removed and allowed to stand for 10 minutes on a horizontal platform, after which the length of the gauge mark is measured in its original state, and the constant load setting rate is calculated by the following formula:

[Mathematical Formula 2]

$$\text{Constant load setting rate }(\%) = (L1 - 100) / 100 \times 100$$

{where L1 is the length (mm) of the gauge mark 10 minutes after removing the load}. The measurement is conducted at 5 locations and the average is calculated.

(c) Stitch deformation rate (%) with 10 kg tensile load in warp direction.

An 80 mm-wide × 250 mm-long test piece was sampled with the weft direction of the three-dimensional knitted fabric as the widthwise direction and the warp direction as the lengthwise direction, and marks were formed at two points 2.5 cm distant from the center of the test piece in the lengthwise direction and two points 2.5 cm distant from the center in the widthwise direction. The test piece is mounted on an FLM-3M Fixed Load Elongation Test Apparatus by Daiei Kagaku Seiki Mfg. Co., Ltd., and a weight is attached to a total load of 10 kg in the lengthwise direction of the test piece. After applying a tensile load of 10 kg for 10 minutes, the length between the marks in the lengthwise direction and the length between the marks in the widthwise direction are measured in the original state, and the stitch deformation rate is calculated by the following formula:

[Mathematical Formula 3]

$$\text{Stitch deformation rate }(\%) = (L2/L3) \times 100 - 100$$

{where L2 is the distance (mm) between two points in the lengthwise direction after a load of 10 kg for 10 minutes, and L3 is the distance (mm) between two points in the widthwise direction after a load of 10 kg for 10 minutes}. The measurement is conducted at 3 locations and the average is calculated.

(d) Air permeability (cc/cm$^2$/sec) from connecting layer toward front side knitted fabric

Using an FX3300 LABOAIR IV air permeability tester by Takayama Reed Co., Ltd., a 15 cm-square three-dimensional knitted fabric test piece is set at the opening of the air permeability tester with the front layer knitted fabric facing downward, a 3 mm-thick, 20 cm-square silicon rubber plate is layered over the outer surface of the back layer knitted fabric and the test head of the air permeability tester is pressed against the top and fixed with a clamp, measuring the air permeability as air enters from the connecting layer of the four sided cross-section of the three-dimensional knitted fabric and passes through the front side knitted fabric, under suction conditions according to the air permeability test method (Method A) of JIS L1096.

(e) Air permeability (cc/cm$^2$/sec) from back layer knitted fabric through front layer knitted fabric

An FX3300 LABOAIR IV air permeability tester by Takayama Reed Co., Ltd. is used to measure the air permeability from the back layer knitted fabric through the front layer knitted fabric of the three-dimensional knitted fabric, according to the air permeability test method (Method A) of JIS L1096.

(f) Scratch resistance (grade)

Using a flat abrasion tester by Daiei Kagaku Seiki Mfg. Co., Ltd., a three-dimensional knitted fabric with a test piece size width of 8 cm and a length of 31 cm is placed on the flat abrasion table of a flat abrasion tester with the front layer knitted fabric facing upward, and both ends are anchored with a clamp. Magic Tape™ A8693Y.71 (length: 5 cm) by Kuraray Fastening Co., Ltd. is attached to a friction block with the hook side facing outward. A reciprocal abrasion test is carried out 5 times with the friction block set on the test piece, using a pressing load of 9.8 N including the friction block, a stroke of 14 cm and a speed of 60 ±10 strokes/min. Test pieces are taken in the warp direction and weft direction of the three-dimensional knitted fabric and measured, observing the state of abrasion of the test piece surface after the test and assessing the grade as follows. The assessment is made with 0.5 grade increments.

Grade 5: No napping found
Grade 4: Slight napping found
Grade 3: Clear napping found but no visible yarn breakage
Grade 2: Moderate napping with some yarn breakage or yarn pull-out
Grade 1: Considerable napping, severe impairment of outer appearance

(g) Taber abrasion resistance (JASO method) (grade)

Using a Taber abrasion tester according to JASOM403 Method A (Taber rotary abrasor method), the test piece is abraded 1000 times with a CS-10 abrasive wheel under a load of 500 g at a speed of 70 rpm. The tested piece is observed for surface abrasion and a grade assessment is made as follows. The assessment is made with 0.5 grade increments.

Grade 5: No change in surface condition
Grade 4: Some napping
Grade 3: Extensive napping
Grade 2: Extensive napping with thin yarns
Grade 1: Yarn breakage

(h) Taber abrasion resistance (ASTM method) (grade)

A Taber abrasion tester is used according to ASTM 3884-9 (rotating platform double head method), and abrasion is carried out 1000 times with a CS-10 abrasive wheel with a load of 1000 g and a speed of 72 rpm. The tested piece is observed for surface abrasion and a grade assessment is made as follows, according to JASOM403, Method A. The assessment is made with 0.5 grade increments.

Grade 5: No change in surface condition
Grade 4: Some napping
Grade 3: Extensive napping
Grade 2: Extensive napping with thin yarns
Grade 1: Yarn breakage

(i) Tactile sensation evaluation (grade)

A 15 cm-square sample is taken and humidified for 8 hours or longer in a steady temperature and humidity room at 20°C temperature and 65% humidity.
Ten participants are selected, and after lightly rubbing the fabric by up-down movement using 4 fingers without the thumb while blindfolded in the constant temperature and humidity room, assessment is made on the following scale in 0.5 grade increments. The results are recorded as mean values for the 10 participants.

Grade 5: Very comfortable
Grade 4: Slightly comfortable
Grade 3: Neither comfortable nor uncomfortable
Grade 2: Slightly uncomfortable
Grade 1: Very uncomfortable

[Example 1]

A 22-gauge double Raschel knitting machine having 6 reeds and 6 mm trick plate distance was used to supply false twisted yarn of 167 dtex, 48 filament polyethylene terephthalate fibers (black raw-dyed yarn) from two reeds (L1, L2, also referred to as combs, or guide bars), doubling the yarns in 1-in, 1-out (L1) and 1-out, 1-in (L2) arrangements, to supply false twisted finished yarn of 84 dtex, 24 filament polyethylene terephthalate fibers (black raw-dyed yarn) from one reed (L3) for formation of the shape-anchoring layer, in an all-in arrangement, to supply a monofilament of 110 dtex polyethylene terephthalate fibers (black raw-dyed yarn) from one reed (L4) for formation of the connecting part in a 1-in, 1-out (L4) arrangement, and to further supply false twisted yarn of 110 dtex, 36 filament polyethylene terephthalate fibers (black raw-dyed yarn) from two reeds (L5, L6), for formation of the back layer knitted fabric, in an all-in arrangement.

A greige for a three-dimensional knitted fabric having the following knitted pattern was knitted with a machine course of 35 course/2.54 cm. The obtained greige was stretched out to 5% width, and dry heat setting was carried out at 180°C × 1 minute at an overfeed rate of 0%, to obtain a three-dimensional knitted fabric with finished knitted fabric density of 37 course/inch and 24 wale/inch.

(Knitted pattern)

L1: 0111/2122/5444/3433//(1-in, 1-out)
L2: 4544/4333/1011/1222//(1-out, 1-in)
L3: 0111/2111/1011/1211//(all-in)
L4: 3410/3245/2145/2310//(1-out, 1-in)
L5: 1110/1112//(all-in)
L6: 1123/2210//(all-in)

[Example 2]

A three-dimensional knitted fabric with finished knitted fabric density of 37 course/inch and 24 wale/inch was obtained in the same manner as Example 1, except that the structures of L1, L2, L3 and L4 were changed to the following.

(Knitted pattern)

L1: 0111/3222/0111/3222//(1-in, 1-out)
L2: 2322/1011/2322/1011//(1-out, 1-in)
L3: 1211/1011/1211/1011//(all-in)
L4: 3410/4367/3410/4367//(1-in, 1-out)

[Example 3]

A three-dimensional knitted fabric with finished knitted fabric density of 37 course/inch and 24 wale/inch was obtained in the same manner as Example 1, except that the structure of L3 was changed to the following.

(Knitted pattern)

L3: 0111/3222/1011/2322//(all-in)

[Example 4]

A three-dimensional knitted fabric with finished knitted fabric density of 37 course/inch and 24 wale/inch was obtained in the same manner as Example 1, except that the structure of L3 was changed to the following.

(Knitted pattern)

L3: 0111/4333/1011/3433//(all-in)

[Example 5]

An 18-gauge double Raschel knitting machine having 6 reeds and 6 mm trick plate distance was used to supply false twisted yarn of 222 dtex, 72 filament polyethylene terephthalate fibers (black raw-dyed yarn) from two reeds (L1, L2), for formation of the front layer knitted fabric, doubling the yarns in 1-in, 1-out (L1) and 1-out, 1-in (L2) arrangements, to supply false twisted finished yarn of 110 dtex, 36 filament polyethylene terephthalate fibers (black raw-dyed yarn) from one reed (L3) for formation of the shape-anchoring layer, in an all-in arrangement, to supply a monofilament of 110 dtex polyethylene terephthalate fibers (black raw-dyed yarn) from one reed (L4) for formation of the connecting part in a 1-in, 1-out (L4) arrangement, and to further supply false twisted yarn of 110 dtex, 36 filament polyethylene terephthalate fibers (black raw-dyed yarn) from two reeds (L5, L6), for formation of the back layer knitted fabric, in an all-in arrangement.

A greige for a three-dimensional knitted fabric having the following knitted pattern was knitted with a machine course of 29 course/2.54 cm. The obtained greige was stretched out to 5% width, and dry heat setting was carried out at 180°C × 1 minute at an overfeed rate of 0%, to obtain a three-dimensional knitted fabric with finished knitted fabric density of 31 course/inch and 20 wale/inch.

(Knitted pattern)

L1: 0111/2122/5444/3433//(1-in, 1-out)
L2: 4544/4333/1011/1222//(1-out, 1-in)
L3: 0111/2111/1011/1211//(all-in)
L4: 3410/3245/2145/2310//(1-out, 1-in)
L5: 1110/1112//(all-in)
L6: 1123/2210//(all-in)

[Example 6]

A 28-gauge double Raschel knitting machine having 6 reeds and 3 mm trick plate distance was used to supply false twisted yarn of 56 dtex, 18 filament polyethylene terephthalate fibers (black raw-dyed yarn) from two reeds (L1, L2), for formation of the front layer knitted fabric, doubling the yarns in 1-in, 1-out (L1) and 1-out, 1-in (L2) arrangements, to supply false twisted finished yarn of 56 dtex, 18 filament polyethylene terephthalate fibers (black raw-dyed yarn) from one reed (L3) for formation of the shape-anchoring layer, in an all-in arrangement, to supply a monofilament of 60 dtex polyethylene terephthalate fibers (black raw-dyed yarn) from one reed (L4) for formation of the connecting part in a 1-in, 1-out (L4) arrangement, and to further supply false twisted yarn of 56 dtex, 18 filament polyethylene terephthalate fibers (black raw-dyed yarn) from two reeds (L5, L6), for formation of the back layer knitted fabric, doubling the yarns in an all-in arrangement.

A greige for a three-dimensional knitted fabric having the following knitted pattern was knitted with a machine course of 40 course/2.54 cm. The obtained greige was stretched out to 5% width, and dry heat setting was carried out at 180°C × 1 minute at an overfeed rate of 0%, to obtain a three-dimensional knitted fabric with finished knitted fabric density of 42 course/inch and 30 wale/inch.

(Knitted pattern)

L1: 0111/2122/5444/3433//(1-in, 1-out)
L2: 4544/4333/1011/1222//(1-out, 1-in)
L3: 0111/2111/1011/1211 //(all-in)
L4: 3410/3245/2145/2310//(1-out, 1-in)
L5: 1110/1112//(all-in)
L6: 1123/2210//(all-in)

[Example 7]

A three-dimensional knitted fabric with finished knitted fabric density of 37 course/inch and 24 wale/inch was obtained in the same manner as Example 1, except that the L3 yarn was changed to 84 dtex, 24 filament low-melting-point polyester yarn (BELLCOUPLE[R] by KB Seiren, Ltd.), and the heat setting conditions were changed to 190°C × 1 minute.

[Example 8]

A three-dimensional knitted fabric with finished knitted fabric density of 37 course/inch and 24 wale/inch was obtained in the same manner as Example 1, except that the thread arrangements of L1 and L2 were changed to the following.

(Knitted pattern)

L1: 0111/2122/5444/3433// (1-in, 1-out × 4 repeats + 2-out)
L2: 4544/4333/1011/1222// (1-out, 1-in × 4 repeats + 2-out)

[Comparative Example 1]

A 22-gauge double Raschel knitting machine having 6 reeds and 6 mm trick plate distance was used to supply false twisted yarn of 167 dtex, 48 filament polyethylene terephthalate fibers (black raw-dyed yarn) from two reeds (L1, L2) for formation of the front layer knitted fabric, doubling the yarns in a 1-in, 1-out (L1) and 1-out, 1-in (L2) arrangement, to supply a monofilament of 110 dtex polyethylene terephthalate fibers (black raw-dyed yarn) from one reed (L4) for formation of the connection part in a 1-in, 1-out (L4) arrangement, and to further supply false twisted yarn of 110 dtex, 36 filament polyethylene terephthalate fibers (black raw-dyed yarn) from two reeds (L5, L6), for formation of the back layer knitted fabric, in an all-in arrangement.

A greige for a three-dimensional knitted fabric having the following knitted pattern was knitted with a machine course of 35 course/2.54 cm. The obtained greige was stretched out to 5% width, and dry heat setting was carried out at 180°C × 1 minute at an overfeed rate of 0%, to obtain a three-dimensional knitted fabric with finished knitted fabric density of 37 course/inch and 24 wale/inch.

(Knitted pattern)

L1: 1011/1222/4544/4333//(1-in, 1-out)
L2: 4544/4333/1011/1222//(1-out, 1-in)
L3: No yarn supplied
L4: 3410/3245/2145/2310//(1-in, 1-out)
L5: 1110/1112//(all-in)
L6: 1123/2210//(all-in)

[Comparative Example 2]

A 22-gauge double Raschel knitting machine having 6 reeds and 1.8 mm trick plate distance was used to supply false twisted finished yarn of 84 dtex, 36 filament polyethylene terephthalate fibers (black raw-dyed yarn) from two reeds (L1, L2) in a 3-in, 1-out (L1, L2) arrangement, to supply false twisted finished yarn of 84 dtex, 36 filament polyethylene terephthalate fibers (black raw-dyed yarn) from one reed (L3) for formation of the shape-anchoring layer, in an all-in arrangement, to supply a false twisted finished yarn of 33 dtex, 12 filament polyethylene terephthalate fibers (black raw-dyed yarn) from one reed (L4) for formation of the connecting part in an all-in (L4) arrangement, and to further supply false twisted finished yarn of 84 dtex, 36 filament polyethylene terephthalate fibers (black raw-dyed yarn) from two reeds (L5, L6), for formation of the back layer knitted fabric, in an all-in arrangement.

A greige for a three-dimensional knitted fabric having the following knitted pattern was knitted with a machine course of 32 course/2.54 cm. The obtained greige was stretched out to 5% width, and dry heat setting was carried out at 180°C × 1 minute at an overfeed rate of 0%, to obtain a three-dimensional knitted fabric with finished knitted fabric density of 34 course/inch and 24 wale/inch.

(Knitted pattern)

L1: 0000/0000/0100/0100//(3-in, 1-out)
L2: 0100/0100/0000/0000//(3-in, 1-out)
L3: 3433/1011//(all-in)
L4: 0112/2110//(all-in)
L5: 0111/1000//(all-in)
L6: 1011/3433//(all-in)

[Comparative Example 3]

A 9-gauge double Raschel knitting machine having 6 reeds and 12 mm trick plate distance was used to supply crimped yarn of 833 dtex, 192 filament polyethylene terephthalate fibers (black raw-dyed yarn) from two reeds (L1, L2) in 1-in, 1-out (L1) and 1-out, 1-in (L2) arrangements, to supply false twisted finished yarn of 250 dtex, 72 filament polyethylene terephthalate fibers (black raw-dyed yarn) from one reed (L3) for formation of the shape-anchoring layer, in an all-in arrangement, to supply a monofilament of 667 dtex polyethylene terephthalate fibers (black raw-dyed yarn) from one reed (L4) for formation of the connecting part in an all-in (L4) arrangement, and to further supply crimped yarn of 833 dtex, 192 filament polyethylene terephthalate fibers (black raw-dyed yarn) from two reeds (L5, L6), for formation of the back layer knitted fabric, in 1-in, 1-out (L5) and 1-out, 1-in (L6) arrangements.

A greige for a three-dimensional knitted fabric having the following knitted pattern was knitted with a machine course of 11 course/2.54 cm. The obtained greige was stretched out to 5% width, and dry heat setting was carried out at 180°C × 1 minute at an overfeed rate of 0%, to obtain a three-dimensional knitted fabric with finished knitted fabric density of 13 course/inch and 11 wale/inch.

(Knitted pattern)

L1: 1011/1211/1011/2322/2122/2322//(1-in, 1-out)
L2: 2322/2122/2322/1011/1211/1011//(1-out, 1-in)
L3: 1011//(all-in)
L4: 2110/1223//(all-in)
L5: 1011/1211/1011/2322/2122/2322//(1-in, 1-out)
L6: 2322/2122/2322/1011/1211/1011//(1-out, 1-in)

[Comparative Example 4]

An 18-gauge double Raschel knitting machine having 6 reeds and 15 mm trick plate distance was used to supply false twisted finished yarn of 222 dtex, 60 filament polyethylene terephthalate fibers (black raw-dyed yarn) from two reeds (L1, L2) in 1-in, 1-out (L1) and 1-out, 1-in (L2) arrangements, to supply false twisted finished yarn of 110 dtex, 36 filament polyethylene terephthalate fibers (black raw-dyed yarn) from one reed (L3) for formation of the shape-anchoring layer, in an all-in arrangement, to supply a monofilament of 333 dtex polyethylene terephthalate fibers (black raw-dyed yarn) from one reed (L4) for formation of the connecting part in an all-in (L4) arrangement, and to further supply crimped yarn of 222 dtex, 60 filament polyethylene terephthalate fibers (black raw-dyed yarn) from two reeds (L5, L6), for formation of the back layer knitted fabric, in 1-in, 1-out (L5) and 1-out, 1-in (L6) arrangements.

A greige for a three-dimensional knitted fabric having the following knitted pattern was knitted with a machine course of 24 course/2.54 cm. The obtained greige was stretched out to 5% width, and dry heat setting was carried out at 180°C × 1 minute at an overfeed rate of 0%, to obtain a three-dimensional knitted fabric with finished knitted fabric density of 26 course/inch and 20 wale/inch.

L1: 1011/1211/1011/2322/2122/2322//(1-in, 1-out)
L2: 2322/2122/2322/1011/1211/1011//(1-out, 1-in)
L3: 1211/1011//(all-in)
L4: 4554/3210/0123//(all-in)
L5: 1000/0111//(1-in, 1-out)
L6: 3433/1011//(1-out, 1-in)

The results for the Examples and Comparative Examples are summarized in Tables 1 and 2 below.

[Table 1]

| | | | Example 1 | Example 2 | Example 3 | Example 4 | Example 5 | Example 6 | Example 7 |
|---|---|---|---|---|---|---|---|---|---|
| Knitting machine gauge | Gauge | | 22 | 22 | 22 | 22 | 18 | 28 | 22 |
| Yarn usage | Front layer knitted fabric | Front side layer | PET 167 dtex/48f black raw-dyed false-twisted yarn × 2-ply | PET 167 dtex/48f black raw-dyed false-twisted yarn × 2-ply | PET 167 dtex/48f black raw-dyed false-twisted yarn × 2-ply | PET 167 dtex/48f black raw-dyed false-twisted yarn × 2-ply | PET 222 dtex/72f black raw-dyed false-twisted yarn × 2-ply | PET 56 dtex/18f black raw-dyed false-twisted yarn × 2-ply | PET 167 dtex/48f black raw-dyed false-twisted yarn × 2-ply |
| | | Shape-anchoring layer | PET 84 dtex/24f black raw-dyed false-twisted yarn | PET 84 dtex/24f black raw-dyed false-twisted yarn | PET 84 dtex/24f black raw-dyed false-twisted yarn | PET 84 dtex/24f black raw-dyed false-twisted yarn | PET 110 dtex/36 black raw-dyed false-twisted yarn | PET 56 dtex/18f black raw-dyed false-twisted yarn | PET 84 dtex/24f low-melting-point yarn |
| | Connecting thread | | PET110 dtex | PET110 dtex | PET110 dtex | PET110 dtex | PET110 dtex | PET60 dtex | PET110 dtex |
| | Back layer knitted fabric | | PET 110 dtex/36 black raw-dyed false-twisted yarn | PET 110 dtex/36 black raw-dyed false-twisted yarn | PET 110 dtex/36 black raw-dyed false-twisted yarn | PET 110 dtex/36 black raw-dyed false-twisted yarn | PET 110 dtex/36 black raw-dyed false-twisted yarn | PET 56 dtex/18f black raw-dyed false-twisted yarn × 2-ply | PET 110 dtex/36 black raw-dyed false-twisted yarn |
| Knitted fabric composition | Thickness | (mm) | 5.94 | 6.38 | 6.02 | 6.11 | 6.76 | 3.27 | 5.83 |
| | Basis weight | basis weight (g/m$^2$) | 577 | 622 | 586 | 594 | 638 | 212 | 571 |
| | Finished course density | course/inch | 37 | 37 | 37 | 37 | 31 | 42 | 37 |
| | Finished wale density | wale/inch | 24 | 24 | 24 | 24 | 20 | 30 | 24 |
| | Percentage of number of knit loops in front side layer with respect to number of knit loops in shape-anchoring layer | % | 100.0 | 100.0 | 100.0 | 100.0 | 100.0 | 100.0 | 100.0 |

| | | | Example 1 | Example 2 | Example 3 | Example 4 | Example 5 | Example 6 | Example 7 |
|---|---|---|---|---|---|---|---|---|---|
| | Number of wales between knit loops in shape-anchoring layer | - | 1 (denbigh) | 1 (denbigh) | 2 (cord) | 3 (satin) | 1 (denbigh) | 1 (denbigh) | 1 (denbigh) |
| | Total fineness of yarns forming knit loops, among all knit loops in knitted fabric on side with shape-anchoring layer | dtex | 528 | 528 | 528 | 528 | 664 | 228 | 528 |
| | D1/D2 | - | 3.8 | 3.8 | 3.8 | 3.8 | 5.0 | 2.8 | 3.8 |
| | Stitch density of front layer knitted fabric | - | 18155 | 18155 | 18155 | 18155 | 14593 | 16331 | 18155 |
| | Air permeability from back layer knitted fabric side through to front layer knitted fabric side | cc/cm$^2$/sec | 94.0 | 72.1 | 91.9 | 89.5 | 116.9 | 118.9 | 98.8 |
| | Air permeability from connecting layer toward front side knitted fabric | cc/cm$^2$/sec | 71.1 | 110.2 | 68.2 | 66.3 | 88.5 | 93.6 | 80.1 |
| | Constant load setting rate with 100 N tensile load for 10 minutes | % | 1.0 | 1.8 | 1.5 | 1.7 | 1.3 | 2.7 | 0.8 |
| Evaluation | Stitch deformation rate with 100 N tensile load for 10 minutes | % | 47.4 | 50.2 | 55.8 | 61.2 | 43.1 | 70.4 | 40.1 |
| | Taber abrasion resistance (JASO method) | grade | 4 | 4 | 4.5 | 4.5 | 4.5 | 3 | 4.5 |
| | Taber abrasion resistance (ASTM method) | grade | 3.5 | 3.5 | 4 | 4 | 4 | 3 | 4 |
| | Scratch resistance | grade | 4 | 4 | 4 | 4 | 4 | 3 | 4.5 |
| | Tactile sensation evaluation | grade | 3.9 | 4.1 | 4.1 | 4.3 | 3.2 | 4.4 | 3.0 |

EP 4 678 798 A1

[Table 2]

| | | | | Example 8 | Comp. Example 1 | Comp. Example 2 | Comp. Example 3 | Comp. Example 4 |
|---|---|---|---|---|---|---|---|---|
| Knitted fabric composition | Knitting machine gauge | Gauge | | 22 | 22 | 22 | 9 | 18 |
| | Yarn usage | Front layer knitted fabric | Front side layer | PET 167 dtex/48f black raw-dyed false-twisted yarn × 2-ply | PET 167 dtex/48f black raw-dyed false-twisted yarn × 2-ply | PET 84 dtex/36f black raw-dyed false-twisted yarn | PET 833 dtex/192f BCF (crimped yarn) | PET222 dtex/60f |
| | | | Shape-anchoring layer | PET 84 dtex/24f black raw-dyed false-twisted yarn | - | PET 84 dtex/36f black raw-dyed false-twisted yarn | PET250 dtex/72f | PET110 dtex/36f |
| | | Connecting thread | | PET110 dtex | PET110 dtex | PET33 dtex/12f | PET667 dtex/1 | PET333 dtex/1 |
| | | Back layer knitted fabric | | PET 110 dtex/36 black raw-dyed false-twisted yarn | PET 110 dtex/36 black raw-dyed false-twisted yarn | PET 84 dtex/36f black raw-dyed false-twisted yarn | PET 833 dtex/192f BCF (crimped yarn) | PET222 dtex/60f |
| | Thickness | (mm) | | 5.90 | 5.61 | 1.80 | 12 | 13 |
| | Basis weight | basis weight (g/m$^2$) | | 568 | 501 | 288 | 1290 | 784 |
| | Finished course density | course/inch | | 37 | 37 | 34 | 13 | 26 |
| | Finished wale density | wale/inch | | 24 | 24 | 24 | 11 | 20 |
| | Percentage of number of knit loops in front side layer with respect to number of knit loops in shape-anchoring layer | % | | 80.0 | - | 75.0 | 100.0 | 100.0 |

(continued)

| | | Example 8 | Comp. Example 1 | Comp. Example 2 | Comp. Example 3 | Comp. Example 4 |
|---|---|---|---|---|---|---|
| Number of wales between knit loops in shape-anchoring layer | - | 1 (denbigh) | - | 0 (chained) | 0 (chained) | 1 (denbigh) |
| Total fineness of yarns forming knit loops, among all knit loops in knitted fabric on side with shape-anchoring layer | dtex | 528 | 444 | 201 | 1750 | 665 |
| D1/D2 | - | 3.8 | 3.8 | 5.1 | 1.6 | 1.0 |
| Stitch density of front layer knitted fabric | - | 18155 | 16229 | 10577 | 4706 | 9475 |
| Air permeability from back layer knitted fabric side through to front layer knitted fabric side | cc/cm$^2$/sec | 96.2 | 98.8 | 161.4 | ≥700 (machine limit) | 61.1 |
| Air permeability from connecting layer toward front side knitted fabric | cc/cm$^2$/sec | 74.8 | 91.0 | 122.0 | 274.3 | 136.2 |
| Constant load setting rate with 100 N tensile load for 10 minutes | % | 2.6 | 4.6 | 3.3 | 3.5 | 3.8 |

(continued)

|  |  |  | Example 8 | Comp. Example 1 | Comp. Example 2 | Comp. Example 3 | Comp. Example 4 |
|---|---|---|---|---|---|---|---|
| Evaluation | Stitch deformation rate with 100 N tensile load for 10 minutes | % | 49.8 | 101.6 | 50.6 | 80.2 | 68.7 |
|  | Taber abrasion resistance (JASO method) | grade | 4 | 3 | 3 | 4.5 | 3.0 |
|  | Taber abrasion resistance (ASTM method) | grade | 3 | 2 | 2.5 | 4.0 | 2.0 |
|  | Scratch resistance | grade | 3.5 | 3 | 2 | 4.5 | 2.5 |
|  | Tactile sensation evaluation | grade | 3.5 | 3.6 | 3.4 | 1.8 | 3.2 |

As shown in Tables 1 and 2, the three-dimensional knitted fabrics of Examples 1 to 8 had satisfactory tactile sensation and satisfactory Taber abrasion resistance and scratch resistance according to ASTM standards, as well as low stitch deformation under tensile load.

In contrast, in Comparative Examples 1 and 2, either no shape-anchoring layer was formed, or the percentage (A) of the number of knit loops in the front side layer with respect to the number of knit loops in the shape-anchoring layer was 75%, which resulted in inferior Taber abrasion resistance according to ASTM, and significant stitch deformation under tensile load. In Comparative Example 3, since the knitted fabric density after finishing was low and excessive thick thread was used to maintain strength, the tactile feel was uncomfortable and stitch deformation under tensile load was significant, despite exhibiting satisfactory Taber abrasion resistance and scratch resistance according to ASTM. In Comparative Example 4, the knitted fabric density after finishing was low and the tactile sensation was satisfactory, but the Taber abrasion resistance and scratch resistance according to ASTM were inferior and stitch deformation under tensile load was significant.

INDUSTRIAL APPLICABILITY

The three-dimensional knitted fabric of the invention can be suitably used as a vehicle upholstery because it reduces stitch deformation due to excess elongation when subjected to a tensile load such as during sheet setting, and also has Taber abrasion resistance and scratch resistance as determined by the ASTM method.

**Claims**

1.  A three-dimensional knitted fabric comprising a front layer knitted fabric, a back layer knitted fabric and connecting thread connecting the front layer knitted fabric and back layer knitted fabric, the three-dimensional knitted fabric comprising, in the front layer knitted fabric, a front side layer situated on the outermost side of the three-dimensional knitted fabric, and a shape-anchoring layer that is situated further toward the inner side of the three-dimensional knitted fabric than the front side layer and includes knit loops formed at the same locations as the knit loops in the front side layer, wherein the finished knitted fabric density is 30 course/inch to 64 course/inch, and the percentage (A) of the number of knit loops in the front side layer with respect to the number of knit loops in the shape-anchoring layer is greater than 80% and 100% or lower.

2. The three-dimensional knitted fabric according to claim 1, wherein the knit loops in the front side layer and the knit loops in the shape-anchoring layer are all formed at the same locations.

3. The three-dimensional knitted fabric according to claim 1 or 2, wherein knit loops separated by 1 wale or more in the shape-anchoring layer are connected by sinker loops.

4. The three-dimensional knitted fabric according to claim 1 or 2, wherein the shape-anchoring layer is a denbigh stitch.

5. The three-dimensional knitted fabric according to claim 1 or 2, wherein the total fineness of the yarns forming the knit loops among all of the knit loops in the front layer knitted fabric is 100 dtex to 1000 dtex.

6. The three-dimensional knitted fabric according to claim 5, wherein the total fineness of the yarns forming the knit loops among all of the knit loops in the front layer knitted fabric is 250 dtex to 1000 dtex.

7. The three-dimensional knitted fabric according to claim 1 or 2, wherein among the knit loops in the front layer knitted fabric, for all of the knit loops including the connecting threads, the value of the fineness of the threads other than the connecting threads forming the knit loops divided by the fineness of the connecting threads, is 2.8 or higher.

8. The three-dimensional knitted fabric according to claim 7, wherein among the knit loops in the front layer knitted fabric, for all of the knit loops including the connecting threads, the value of the fineness of the threads other than the connecting threads forming the knit loops divided by the fineness of the connecting threads, is 3.0 or higher.

9. The three-dimensional knitted fabric according to claim 1 or 2, wherein the stitch density of the front layer knitted fabric is 11,500 to 20,000, as calculated by the following formula:

$$\text{Stitch density } M = N \times \sqrt{D}$$

{where N is the number of stitches (number) of the front layer knitted fabric per 2.54 cm-square, and D is the total fineness (dtex) of the fibers forming a single stitch of the front layer knitted fabric}.

10. The three-dimensional knitted fabric according to claim 1 or 2, wherein the constant load setting rate is 3% or lower when a 10 kg tensile load is applied in the warp direction of the three-dimensional knitted fabric over a period of 10 minutes.

11. The three-dimensional knitted fabric according to claim 1 or 2, wherein the air permeability of the three-dimensional knitted fabric from the connecting layer toward the front side knitted fabric is 33 cc/cm$^2$/sec or greater.

12. The three-dimensional knitted fabric according to claim 1 or 2, wherein heat-fusible yarn is included in either or both the front layer knitted fabric and back layer knitted fabric.

13. A vehicle upholstery comprising a three-dimensional knitted fabric according to claim 1 or 2, wherein of the front layer knitted fabric and the back layer knitted fabric, the front layer knitted fabric is situated on the indoor side.

14. The vehicle upholstery according to claim 13, which is a surface covering material for a seat.

## INTERNATIONAL SEARCH REPORT

International application No.

**PCT/JP2024/009193**

### A. CLASSIFICATION OF SUBJECT MATTER

*D04B 21/14*(2006.01)i; *A47C 27/12*(2006.01)i; *B60R 13/02*(2006.01)i
FI:  D04B21/14 Z; B60R13/02 B; A47C27/12 F; A47C27/12 Z

According to International Patent Classification (IPC) or to both national classification and IPC

### B. FIELDS SEARCHED

Minimum documentation searched (classification system followed by classification symbols)

D04B1/00-1/28;21/00-21/20; A47C27/00-27/22;31/00-31/12; B60R13/01-13/04;13/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2018-40082 A (SEIREN CO., LTD.) 15 March 2018 (2018-03-15)<br>claims 1, 9 | 1-14 |
| A | JP 2016-84550 A (SEIREN CO., LTD.) 19 May 2016 (2016-05-19)<br>claim 1 | 1-14 |
| A | JP 2014-185419 A (KURARAY TRADING CO., LTD.) 02 October 2014 (2014-10-02)<br>claim 1 | 1-14 |
| A | JP 10-195757 A (UNITIKA LTD.) 28 July 1998 (1998-07-28)<br>claim 1 | 1-14 |

☐ Further documents are listed in the continuation of Box C. ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 May 2024** | **28 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/009193**

| Patent document cited in search report | | | Publication date (day/month/year) | Patent family member(s) | Publication date (day/month/year) |
|---|---|---|---|---|---|
| JP | 2018-40082 | A | 15 March 2018 | (Family: none) | |
| JP | 2016-84550 | A | 19 May 2016 | (Family: none) | |
| JP | 2014-185419 | A | 02 October 2014 | (Family: none) | |
| JP | 10-195757 | A | 28 July 1998 | (Family: none) | |

Form PCT/ISA/210 (patent family annex) (July 2022)

**REFERENCES CITED IN THE DESCRIPTION**

**Patent documents cited in the description**

- WO 2022202815 A
- WO 2007097363 A